# FASCICULE DE BREVET EUROPEEN

(11) **EP 2 059 776 B1**
(45) Date de publication et mention de la délivrance du brevet: **30.05.2012**
(21) Numéro de dépôt: 07826126.0
(22) Date de dépôt: 24.08.2007
(51) Int. Cl.: A47J 27/62, G01D 11/24, G01D 11/26, G01K 5/70, A47J 45/06

(54) **DISPOSITIF DE MESURE DE TEMPÉRATURE**
VORRICHTUNG ZUR TEMPERATURMESSUNG
TEMPERATURE MEASURING DEVICE

(30) Priorité: 24.08.2006 EP 06119497
(43) Date de publication de la demande: 20.05.2009
(73) Titulaire: Rüeger S.A., 1023 Crissier (CH)
(72) Inventeur: STOERIG, Goetz, CH-1023 Crissier (CH)
(74) Mandataire: Ganguillet, Cyril
(86) Numéro de dépôt international: PCT/IB2007/053398
(87) Numéro de publication internationale: WO 2008/023353

(56) Documents cités:
- EP-A2- 0 124 483
- DE-A1- 1 951 140
- DE-C- 476 684
- US-A- 2 254 570
- US-A- 3 373 611
- US-A- 3 851 529

## Description

La présente invention concerne un dispositif de mesure de température, comprenant notamment un thermomètre à capteur bimétallique, selon le préambule de la revendication 1.

L'homme du métier connaît, de part les demandes de brevet publiées EP 0 124 483, US 3 373 611 et US 3 851 529, des thermomètres à capteur bimétallique conformes au préambule de la revendication 1.

On sait qu'un thermomètre usuel se compose d'un capteur de température qui doit être immergé dans le milieu que l'on veut mesurer et d'un système indicateur qui doit comprendre un organe visible se déplaçant devant des repères également visibles pour permettre de lire la température mesurée. En général, ces deux composants sont unis dans un même objet susceptible d'être manipulé à volonté. Cependant, dans certaines circonstances, la réalisation d'un dispositif de mesure de température comportant ces deux composants liés de manière conventionnelle présente des difficultés qui n'ont pu être surmontées de manière satisfaisante jusqu'à maintenant.

Ainsi, la cuisson de certains aliments dans un récipient fermé lorsqu'on désire que cette cuisson se produise soit hors de la présence d'eau additionnelle, comme dans le cas de la préparation de certains légumes, soit, comme par exemple dans le cas de la cuisson de viande, sans présence d'un corps gras additionnel, présentait jusqu'à maintenant des difficultés, car le rythme et la durée de la montée de température du fond de récipient, qui est en contact avec les aliments, lui-même en contact avec la source de chaleur, était difficilement appréciable et l'observation directe était entravée. En plus, pour maintenir la couleur et les valeurs nutritives des légumes, il faut rapidement augmenter la température du fond du récipient à environ 80°C et maintenir cette température lors de la cuisson.

La présente invention a pour but de résoudre cette difficulté en proposant un dispositif de mesure de température, en particulier pour la mesure de la température à l'intérieur d'un récipient de cuisson fermé, qui soit compact, d'un emploi facile et assurant le contrôle de température requis à l'endroit inaccessible désigné. Ces buts sont atteints par le dispositif défini par les revendications annexées.

Diverses formes d'exécution du dispositif selon l'invention sont décrites à titre d'exemples dans la description qui suit et sont représentées au dessin annexé, dont :
- la figure 1 est une vue en coupe de la première forme d'exécution donnée en exemple;
- la figure 2 est une vue en coupe partielle à échelle agrandie d'une zone A de la figure 1 montrant la disposition d'une liaison particulièrement importante dans le dispositif;
- la figure 3 est une vue en plan de dessus du dispositif de la figure 1;
- les figures 4, 5, 6 sont des vues en coupe analogues à la figure 1 montrant trois autres formes d'exécution du dispositif, celle de la figure 6 étant représentée en deux variantes;
- la figure 7 est une vue schématique en élévation partiellement coupée illustrant l'emploi du dispositif en liaison avec un récipient de cuisson fermé, posé sur une plaque chauffante;
- la figure 8 montre une coupe d'une autre forme d'exécution du dispositif intégré dans le bouton d'un couvercle;
- la figure 11 montre une coupe d'une variante de la forme d'exécution du dispositif selon la figure 8; et

Le problème tel qu'exposé dans toute sa généralité ci-dessus appelle une série de contraintes auxquelles le dispositif devra satisfaire. Ainsi, en partant de l'exemple d'une opération de cuisson de légumes dans un récipient avec une quantité d'eau aussi réduite que possible, on est conduit à la nécessité de fermer le récipient par un couvercle. Pour maintenir le maximum de la valeur nutritive des aliments, ainsi que leurs aspects optiques, il est nécessaire de chauffer les aliments aussi vite que possible à la température de cuisson et maintenir cette température durant toute la cuisson. La zone du fond du récipient en contact avec les aliments va donc subir une élévation de température qui, dans certains cas, doit être rapide mais est inobservable directement et peut risquer de détériorer les aliments en les brûlant.

L'invention qui va être exposée maintenant se base sur la constatation inattendue que le fond et les aliments placés dans le fond du récipient, comme indiqué ci-dessus, vont dégager, dès que l'opération de chauffe est entamée, une énergie thermique prenant la forme soit d'un rayonnement infrarouge soit d'un flux calorifique dû à de la vapeur d'eau se dégageant des aliments eux-mêmes, ou de la petite quantité d'eau dont ils ont été recouverts lors du lavage, cette vapeur se condensant au contact du couvercle et retombant dans le récipient en circuit fermé. Le but visé est atteignable en réalisant un dispositif de mesure dont l'inertie thermique du capteur est suffisamment faible pour réagir au rayonnement infrarouge ou au flux de vapeur mis en oeuvre, en assemblant les constituants du capteur de manière à éviter toute perte de chaleur et concentrer l'énergie sur le capteur, et en plaçant l'élément indicateur de manière qu'il soit facilement observable.

Les différentes formes d'exécution du dispositif de mesure de température selon l'invention, que l'on va décrire maintenant, remplissent ces conditions.

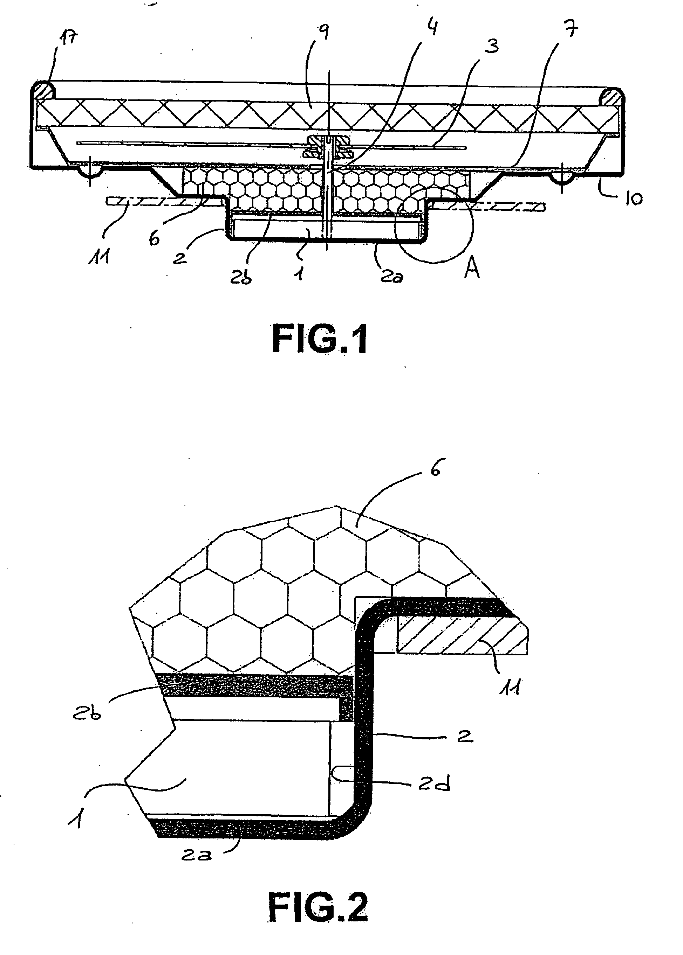

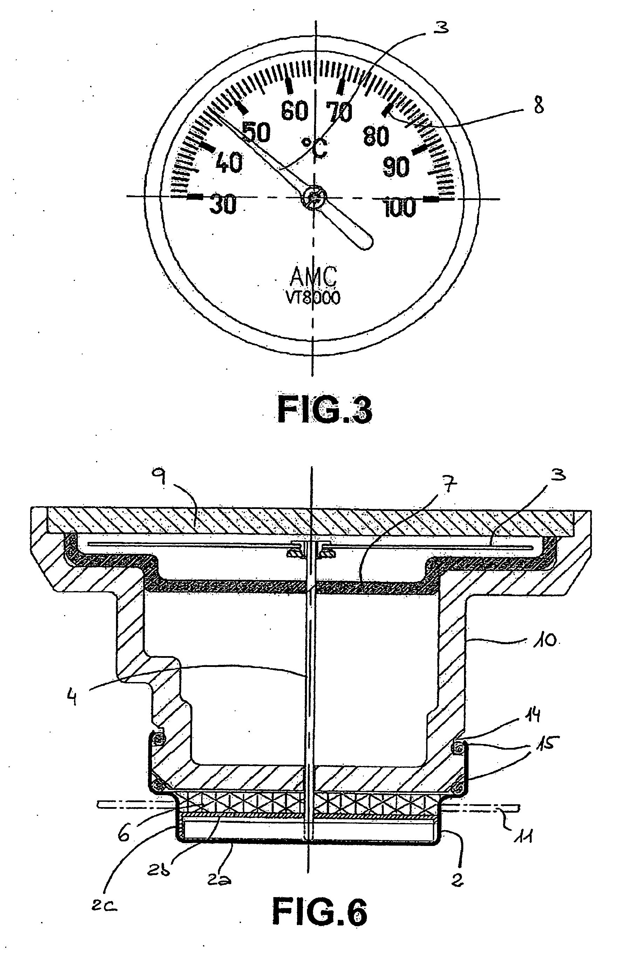

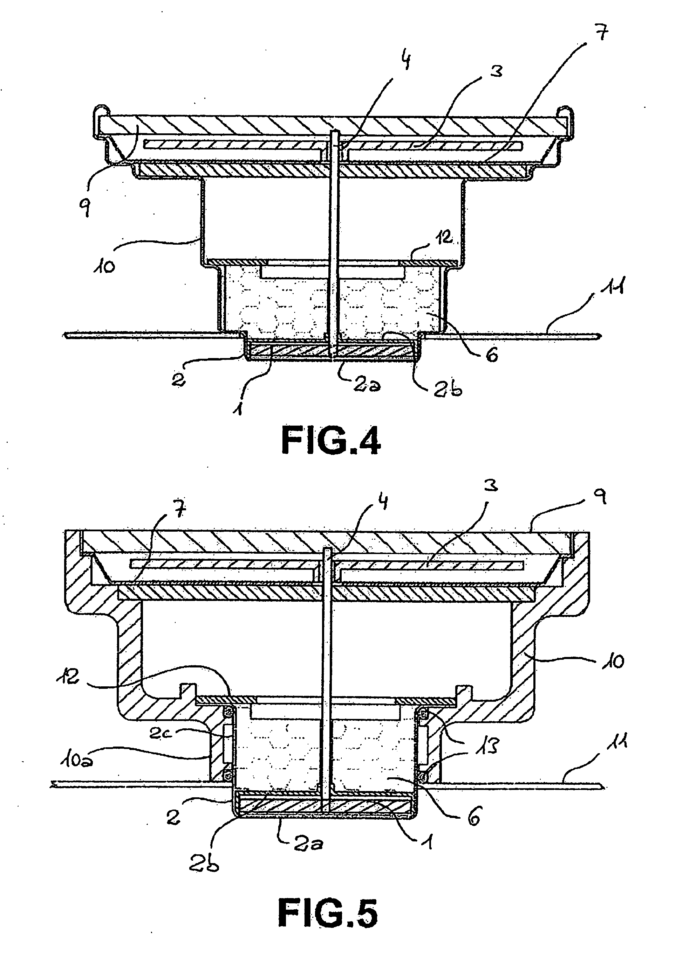

Dans le dispositif de mesure des figures 1, 2, 3 et 4, un capteur de température 1 constitué d'une lame bimétallique roulée en spirale est fixé dans un boîtier métallique inférieur 2 en forme de cylindre plat, à l'intérieur d'un espace constitué par le fond 2a du boîtier 2 et une calotte 2b emboîtée dans le boîtier 2. L'extrémité extérieure de la lame bimétallique 1 est soudée par point, brasée ou collée contre la paroi cylindrique intérieure 2d du boîtier métallique à travers une ouverture dans la paroi cylindrique inférieure de la calotte 2b, tandis que son extrémité intérieure est fixée à une tige centrale 4 qui porte à son sommet une aiguille ou un disque indicateur 3 constituant l'organe indicateur du thermomètre. Cette tige pivote, comme représenté à la figure 1, entre le fond 2a et le centre de la calotte 2b ou, comme à la figure 4, dans le verre du thermomètre. Ces éléments sont des constituants normaux et connus en soi des thermomètres à lame bimétallique. Dans la disposition décrite ici, la tige 4 traverse, au-dessus de la calotte 2b dans un boîtier supérieur 10, un corps isolant 6. La calotte 2b constitue un distributeur thermique dont les propriétés seront décrites plus loin. La masse isolante 6 réduit au maximum possible la dissipation de la chaleur vers le boîtier supérieur. Une plaque de cadran 7 porte une graduation 8 (figure 3). Un verre 9 engagé dans la partie supérieure du boîtier 10 recouvre le tout, assurant une étanchéité contre la vapeur en cas d'un nettoyage du couvercle dans un lave-vaisselle.

La lame bimétallique 1 comporte, entre les deux bandes de métaux différents dont la dilatation différentielle assure la rotation de la tige 4 en proportion de l'élévation de température, une mince pellicule de cuivre ou d'un alliage de cuivre qui améliore la conductivité de chaleur du bimétal et ainsi sa rapidité de réaction. La rotation de la tige 4, et par conséquent de l'aiguille 3 ou du disque indicateur 3a, est une fonction fidèle de la température perçue par la lame. Dans une variante, afin d'obtenir une meilleure conductivité thermique, la lame bimétallique peut être réalisée avec une forte teneur en cuivre.

La construction du boîtier inférieur 2, 2a, 2b obéit à un certain nombre de règles. Comme on le voit à la figure 2, le fond 2a en tôle d'acier inox ou d'aluminium et la calotte 2b en tôle métallique mince emboutie ou en matière plastique comme par exemple le polycarbonate, sont engagées l'une dans l'autre. Pour le choix du métal et de la matière plastique, il est nécessaire de fixer un compromis entre la meilleure absorption des rayons infrarouges, une bonne conductibilité thermique et une faible capacité thermique. La forme cylindrique donne la rigidité permettant la réduction d'épaisseur des éléments et aussi de la masse du boîtier. En fait, l'utilisation d'acier inox compatible aux aliments a donné de bons résultats. La lame bimétallique en spirale 1 sera placée aussi près que possible du fond 2a. En outre, le fond du boîtier 2a sera revêtu intérieurement d'un agent de transmission de chaleur, comme par exemple une pâte chargée d'aluminium ou de l'oxyde d'aluminium ou une graisse ou huile silicone avec ou sans particules métalliques, une couche d'oxyde métallique tel que l'oxyde d'aluminium ou d'alliages de titane, comme par exemple avec du chrome ou de l'aluminium, une poudre conductrice de carbone ou de métal ou un revêtement obtenu par traitement galvanique ou chimique comme le chromage noir ou le teflonage. Cet agent de transmission de chaleur assure en même temps le transfert calorifique et évite toute friction métallique entre le fond du boîtier et la lame bimétallique en spirale, qui pourrait entraîner une erreur d'indication de température.

La pièce emboutie qui forme le fond 2a du boîtier inférieur se prolonge, comme on le voit aux figures 1 et 2, autour et au-dessus du boîtier inférieur, de manière à former le boîtier supérieur 10 également de forme cylindrique. Ce boîtier contient, de bas en haut, d'abord la calotte 2b constituant ainsi un distributeur thermique. Cet élément est constitué comme mentionné ci-dessus d'un métal, par exemple l'aluminium, ou d'une matière plastique à faibles densité et capacité thermique. Sa fonction est de concentrer la chaleur autour de la lame bimétallique pour augmenter la vitesse de réaction de celle-ci. En effet, un flux de chaleur provient du fond de la casserole et du couvercle, comme on le verra plus loin, et il est important de récupérer ce flux dans les meilleures conditions possibles. Ensuite, le boîtier supérieur 10 contient la masse isolante 6 faite d'un matériau à faible densité, occupant en hauteur une place relativement importante pour bloquer les déperditions de chaleur depuis le boîtier inférieur. Dans le mode d'exécution de la figure 1, au-dessus de l'isolant 6 s'étend la plaque de cadran 7, qui peut être un disque en métal ou en matière plastique rivé, collé ou pourvu de pieds chassés dans des logements du boîtier 10. La plaque de cadran 7 présente un bord périphérique relevé pour servir d'appui au verre 9 fixé de manière étanche au boîtier 10 par rabattement radial centripète de ce dernier et engagement d'un joint d'étanchéité 17, par exemple sous forme d'un anneau torique. Dans le mode d'exécution de la figure 4, de plus grande hauteur, un anneau de maintien 12 est prévu dans le boîtier 10 au-dessus de la masse isolante 6.

Le thermomètre décrit ci-dessus est fixé au couvercle 11 du récipient de cuisson. Selon les figures 1 et 2, le boîtier inférieur 2 est engagé dans une ouverture centrale du couvercle de manière à en être solidaire. Avantageusement, le fond du boîtier 2 est traité pour augmenter le coefficient d'absorption pour les rayonnements infrarouges. Ce traitement peut être un chromage noir ou un revêtement en oxyde de titane ou d'alliage de titane avec chrome et aluminium par exemple.

Les éléments essentiels décrits à propos des figures 1 à 4 se retrouvent dans les trois autres exemples du dispositif de mesure de température représentés aux figures 5 et 6. Ils sont désignés par les mêmes signes de référence.

Dans l'exécution de la figure 5, seul le boîtier inférieur 2 est en métal. Son fond 2a est embouti avec une paroi latérale 2c dont la hauteur peut être beaucoup plus grande que l'épaisseur du boîtier inférieur 2 déterminé par la calotte 2b et le fond 2a. Le boîtier supérieur 10 est ici une pièce en matière plastique moulée ou injectée, de forme cylindrique avec un profil correspondant à celui du boîtier 10 de la figure 4. La paroi latérale 2c du boîtier inférieur 2 est engagée dans le prolongement tubulaire inférieur 10a du boîtier 10, thermiquement isolée contre ce dernier et fixée par des joints annulaires 13 et par un rabattement latéral de la paroi 2c. La disposition de la masse isolante 6, de l'anneau de maintien 12, de la plaque-cadran 7 et du verre 9 correspond à ce qui a été décrit ci-dessus. Le couvercle 11 sera fixé de la même manière.

Une exécution plus ramassée que celles des figures 4 et 5, présentant un rapport maximum entre les volumes des boîtiers supérieur et inférieur, avec un boîtier supérieur en matière plastique et un boîtier inférieur en métal, est représentée à la figure 6. Le boîtier inférieur 2 est un assemblage cylindrique plat comportant un fond 2a embouti avec une paroi latérale 2c de faible hauteur. Une calotte 2b est emboîtée dans le fond. Le boîtier supérieur 10 est une pièce en forme de cuvette en matière plastique qui peut contenir la masse isolante 6, un anneau de maintien (non représenté), la plaque cadran 7 et le verre 9. On voit qu'ici, pour maîtriser les faibles dimensions, on a recours au distributeur thermique intégré à la calotte 2b, placé à l'intérieur de la paroi 2c immédiatement sous le corps isolant 6, à la hauteur où se trouve le couvercle 11, de manière à réaliser un pont chaud avec le couvercle, propre à réduire le flux thermique vers la partie supérieure du boîtier le long de la paroi 2c. On conserve ainsi le maximum de la chaleur captée par le fond 2a du boîtier inférieur pour alimenter le capteur bimétallique 1. La figure 6 montre en fait deux variantes (moitié de gauche et moitié de droite) pour l'exécution de la cuvette à symétrie axiale 10. Dans les deux cas, la fixation du boîtier 2 au boîtier 10 est réalisée par roulage du bord supérieur de la paroi 2c dans une gorge 14 de la cuvette 10 avec interposition de joints toriques 15, de manière à maîtriser les dilatations thermiques. Dans cette forme d'exécution, la tige centrale 4 pivote entre le fond 2a et le cadran 7.

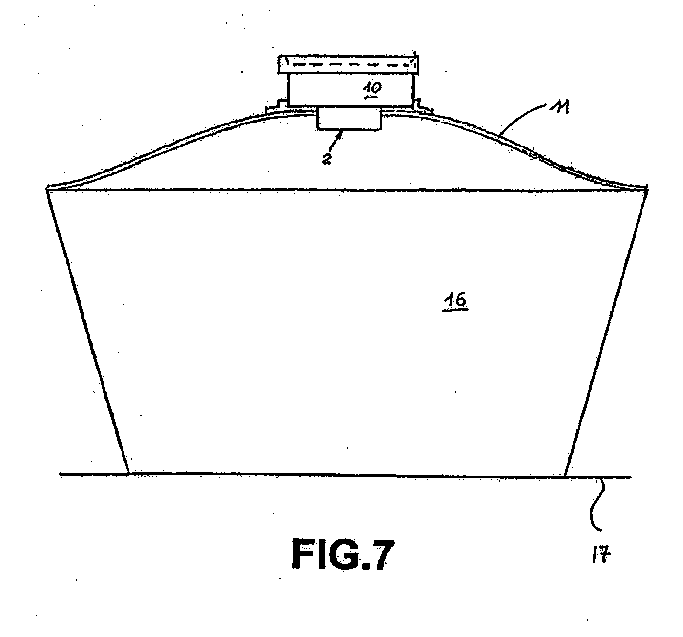

La figure 7 illustre l'utilisation du dispositif de mesure 2, 10 dans un contexte culinaire. Tant la préparation de légumes ou de pommes de terre que la préparation de viandes sont réalisables dans un récipient tel que la casserole 16 fermée par le couvercle 11 sur une surface chauffante 17 d'un vitro-ceran, d'un four à induction ou autre, sans eau ou sans corps gras, en observant l'élévation de la température indiquée par l'aiguille ou disque indicateur 3 sur l'échelle graduée 8 (figure 3). Dans les exemples décrits, le capteur bimétallique est conçu pour mesurer des températures allant de 20 ou 30 jusqu'à 100 degrés centigrades. Les essais ont montré qu'après une période de chauffe intense de 2 à 4 minutes, l'apport de chaleur pouvait être réduit et que ce rythme permettait l'obtention d'une qualité culinaire optimale aussi bien avec des viandes qu'avec des légumes. Le dispositif selon l'invention permet ainsi de chauffer à pleine puissance, alors que jusqu'ici on ne pouvait chauffer qu'au deux tiers de la puissance maximum.

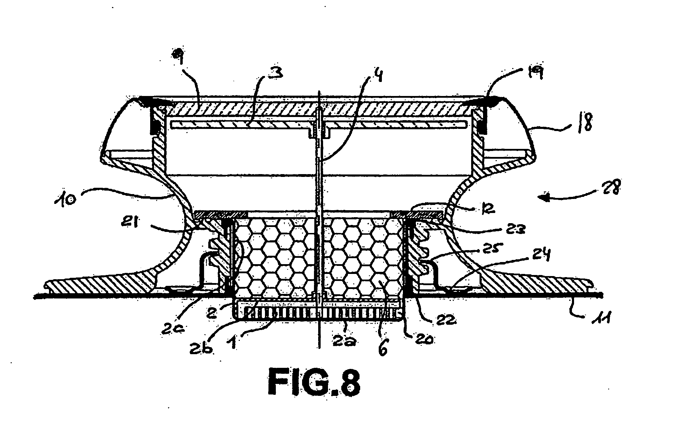

La figure 8 montre une autre forme d'exécution d'un thermomètre intégré dans un bouton 28 du couvercle 11 d'une casserole. Les éléments essentiels des formes d'exécution déjà décrites sont désignés avec les mêmes signes de référence. On reconnaît le boîtier inférieur 2 constitué par le fond 2a et la calotte 2b contenant le capteur bimétallique 1. Ce dernier est relié audit boîtier par soudure par point d'une partie d'extension 20. Un corps isolant 6 de faible densité est maintenu à l'intérieur de la prolongation latérale 2c de la paroi du boîtier 2 au moyen d'un anneau de maintien 12 en matière plastique soudé en 21 sur la partie médiane du boîtier extérieur 10. Des joints toriques 22 et 23 sont interposés entre la paroi latérale 2c et le boîtier supérieur 10. On reconnaît également la tige centrale 4 qui, dans cette forme d'exécution, pivote entre le fond 2a et le verre 9. Toutefois, dans ce mode d'exécution, l'aiguille indicatrice est remplacée par un disque 3 comportant une graduation de température ou des bandes colorées signalisant les plages de température pour les différents aliments à cuire, visibles à travers le verre 9 comportant en outre une zone transparente, un ou plusieurs repères pour la lecture de la température et/ou la définition de la température pour réduire la puissance du chauffage. Le bouton 28 comporte en outre une bague-enjoliveur 18, emboutie ou injectée, et maintenue sur le bouton au moyen d'une bague de fixation 19. Un dispositif de fixation rapide 24 comportant un segment fileté 25 est fixé en 26 sur le couvercle. Ce dispositif 24 permet d'assurer un démontage rapide du bouton du couvercle pour un nettoyage facile et, en cas d'utilisation du couvercle dans un four, permet de démonter ce dernier préalablement.

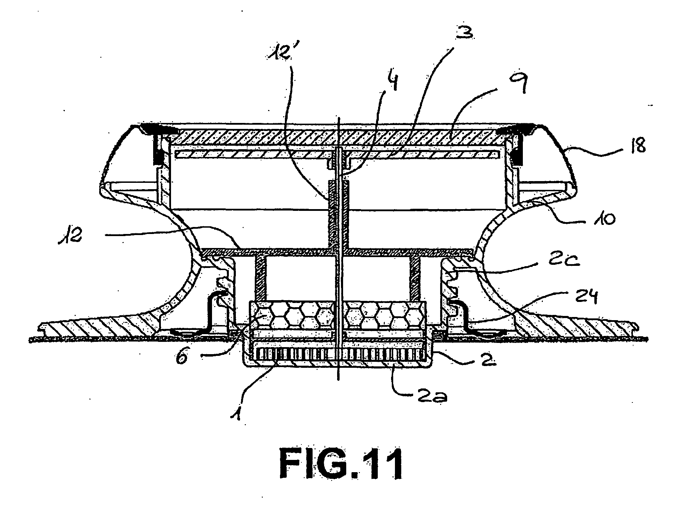

Selon une variante d'exécution représentée à la figure 11, le boîtier du dispositif est réalisé en une seule pièce tout en matière plastique de couleur foncée, par exemple noire, constituant à la fois le fond 2a et la partie latérale 2c du boîtier inférieur, ainsi que le boîtier supérieur 10, la matière plastique choisie étant par exemple choisie parmi les polyamides, les PET et les polysulfones, les seuls éléments métalliques du dispositif étant le capteur bimétallique 1, l'axe ou tige centrale 4, le dispositif de fixation rapide 24 et la bague-enjoliveur 18. Dans cette variante d'exécution, la tige centrale 4 pivote entre le fond 2a et une partie tubulaire centrale 12' de l'anneau de maintien 12. Les mesures effectuées par le déposant avec ce mode d'exécution ont en effet montré que, de façon surprenante, l'échauffement du dispositif, notamment en cas d'absorption de radiation infrarouge, était très rapide avec de telles matières plastiques noires, plus rapide qu'avec un boîtier inférieur 2 en acier. D'autre part, un tel dispositif présente l'avantage d'être plus simple à réaliser, puisqu'il ne comporte notamment pas de joints. Le verre 9 de ce dispositif est réalisé dans la même matière que le boîtier, de façon à permettre son soudage facile sur le boîtier.

## Revendications

1. Dispositif de mesure de température comprenant un thermomètre ayant un capteur à lame bimétallique (1) et un organe indicateur (3) de la température mesurée, tous deux logés dans un boîtier (10, 2) fermé par une plaque transparente (9), dispositif dans lequel le dit boîtier comprend un élément supérieur (10) avec le dit organe indicateur (3) et un élément inférieur (2) avec le dit capteur bimétallique (1), **caractérisé en ce que** l'élément inférieur (2) comporte une calotte mince (2b) s'étendant au-dessus de ladite lame métallique (1) et une paroi (2a) s'étendant au-dessous de ladite lame, **en ce que** ladite paroi (2a) constitue un fond de l'élément inférieur (2) et se prolonge par une paroi cylindrique (2c) dans laquelle la dite calotte (2b) est emboîtée de manière qu'un flux thermique provenant de bas en haut sous forme d'un rayonnement infrarouge ou d'un flux calorifique dû à de la vapeur d'eau et atteignant ledit élément inférieur (2) du boîtier soit conduit dans ladite paroi (2a) et dans la calotte (2b), et **en ce qu'**un élément d'isolation (6) est placé immédiatement sur ladite calotte (2b) dans le boîtier (10, 2), de manière à isoler thermiquement l'élément supérieur (10) de l'élément inférieur (2).

2. Dispositif selon la revendication 1, **caractérisé en ce qu'**il est agencé pour que le capteur bimétallique (1) fonctionne dans une gamme de températures comprise entre la température ambiante et 100 degrés centigrades.

3. Dispositif selon l'une quelconque des revendications 1 à 2, **caractérisé en ce que** l'élément supérieur (10) et l'élément inférieur (2) du boîtier (10, 2) sont fixés l'un à l'autre par leurs parois latérales (10a, 2c) qui sont de matériaux différents.

4. Dispositif selon l'une des revendications 1 à 3, **caractérisé en ce que** le capteur bimétallique (1) comprend une lame incurvée en spirale, fixée par son extrémité extérieure par soudage ou collage à une paroi latérale de l'élément inférieur (2).

5. Dispositif selon l'une des revendications précédentes, **caractérisé en ce que** le capteur bimétallique (1) porte à son extrémité intérieure une tige (4) traversant ladite calotte (2b) qui constitue la paroi supérieure de l'élément inférieur (2), cette tige étant guidée en rotation par au moins un élément de palier fixe de l'élément supérieur (10), et étant munie à son extrémité supérieure d'une aiguille indicatrice (3) se déplaçant sur un cadran (7) ou d'une aiguille indicatrice ou disque indicateur (3), ces organes étant placés sous la dite paroi transparente (9) de l'élément supérieur (10) .

6. Dispositif selon la revendication 5, **caractérisé en ce que** la dite lame bimétallique (1) comporte une pellicule mince de cuivre entre les deux couches métalliques qui la constituent.

7. Dispositif selon l'une des revendications précédentes, **caractérisé en ce que** l'élément inférieur (2) du boîtier (10, 2) est un corps cylindrique dont le fond et la paroi latérale sont formés d'une tôle mince d'un métal ayant une résistance mécanique et une conductibilité thermique au moins égale à celle de l'acier inoxydable.

8. Dispositif selon l'une des revendications précédentes, **caractérisé en ce que** l'élément inférieur (2) est revêtu intérieurement d'un agent de transmission de chaleur sous forme de poudre, de liquide ou de pâte pour égaliser rapidement la température autour de la lame bimétallique.

9. Dispositif selon l'une des revendications précédentes, **caractérisé en ce qu'**une face extérieure (2a) de l'élément inférieur (2), exposée au rayonnement ou au flux calorifique, est traitée pour augmenter sa capacité d'absorption thermique.

10. Dispositif selon la revendication 1, **caractérisé en ce que** la dite calotte (2b) est une pièce en tôle métallique ou en matière plastique disposée de manière à conduire le flux calorifique de la paroi latérale du fond (2a) vers la lame bimétallique (1).

11. Dispositif selon la revendication 1, **caractérisé en ce que** l'ensemble du boîtier est réalisé d'une pièce en matière plastique de couleur foncée.

12. Dispositif selon la revendication 11, **caractérisé en ce que** la dite matière plastique est choisie parmi les polyamides, les PET et les polysulfones.

13. Récipient de cuisson d'aliments comprenant un couvercle muni d'un dispositif de mesure de température selon l'une quelconque des revendications 1 à 12, **caractérisé en ce que** le dit boîtier (10, 2) est fixé au couvercle de façon à permettre un contrôle visuel d'un processus de cuisson sur des aliments placés sans eau ou sans huile ou graisse dans le dit récipient placé lui-même au-dessus d'une source de chaleur.

14. Récipient selon la revendication 13, **caractérisé en ce que** le couvercle est en métal et traité de manière à présenter une conductibilité suffisamment élevée pour réaliser un pont de chaleur vers une zone dudit boîtier (10, 2) avec laquelle une partie du couvercle qui enserre le boîtier est en contact.

15. Récipient selon l'une des revendications 13 ou 14, **caractérisé en ce que** le couvercle présente une ouverture dans laquelle le dit boîtier (10, 2) est partiellement engagé, la dite face latérale cylindrique de l'élément inférieur (2) étant en contact avec le bord de la dite ouverture et son fond (2a) étant directement exposé au flux thermique provenant du récipient.

## Claims

1. A temperature measuring device comprising a thermometer having a bimetallic strip sensor (1) and an indicating means (3) for the measured temperature, both accommodated in a casing (10, 2) closed by a transparent plate (9), said casing of the device comprising an upper element (10) with said indicating means (3) and a lower element (2) with said bimetallic sensor (1), **characterised in that** the lower element (2) comprises a thin cap (2b) extending above said metallic strip (1) and a wall (2a) extending below said strip, **in that** said wall (2a) forms a bottom of the lower element (2) and extends to form a cylindrical wall (2c) into which said cap (2b) is fitted such that a heat flux coming from the bottom upwards in the form of an infrared radiation or a calorific flux due to steam and reaching said lower element (2) of the casing is directed into said wall (2a) and into the cap (2b), and **in that** an insulating element (6) is placed immediately on said cap (2b) in the casing (10, 2), so as to insulate the upper element (10) thermally from the lower element (2).

2. A device according to claim 1, **characterised in that** it is arranged such that the bimetallic sensor (1) functions in a temperature range of between ambient temperature and 100 degrees Celsius.

3. A device according to any one of claims 1 to 2, **characterised in that** the upper element (10) and the lower element (2) of the casing (10, 2) are attached to one another by the side walls thereof (10a, 2c) which are made from different materials.

4. A device according to any one of claims 1 to 3, **characterised in that** the bimetallic sensor (1) comprises a spirally curved strip, attached by the outer end thereof by welding or adhesive bonding to a side wall of the lower element (2).

5. A device according to any one of the preceding claims, **characterised in that** the bimetallic sensor (1) bears on the inner end thereof a rod (4) passing through said cap (2b) which forms the upper wall of the lower element (2), this rod being guided in rotation by at least one stationary bearing element of the upper element (10), and being equipped at the upper end thereof with an indicator needle (3) which moves over a dial (7) or with an indicator needle or indicator disc (3), these means being placed under said transparent wall (9) of the upper element (10).

6. A device according to claim 5, **characterised in that** said bimetallic strip (1) comprises a thin film of copper between the two metallic layers which make it up.

7. A device according to any one of the preceding claims, **characterised in that** the lower element (2) of the casing (10, 2) is a cylindrical body, the bottom and side wall of which are formed from a thin sheet of a metal exhibiting mechanical strength and thermal conductivity at least equal to that of stainless steel.

8. A device according to any one of the preceding claims, **characterised in that** the lower element (2) is coated in the inside with a heat transmission agent in powder, liquid or paste form for rapidly equalising the temperature around the bimetallic strip.

9. A device according to any one of the preceding claims, **characterised in that** an outer face (2a) of the lower element (2), exposed to the radiation or calorific flux, is treated in order to increase the thermal absorption capacity thereof.

10. A device according to claim 1, **characterised in that** said cap (2b) is a part made of sheet metal or of plastics material arranged so as to direct the calorific flux from the side wall of the bottom (2a) towards the bimetallic strip (1).

11. A device according to claim 1, **characterised in that** the whole casing is made of one piece of a dark coloured plastics material.

12. A device according to claim 11, **characterised in that** said plastics material is selected from among polyamides, grades of PET and polysulfones.

13. A food cooking vessel comprising a lid equipped with a temperature measuring device according to any one of claims 1 to 12, **characterised in that** said casing (10, 2) is attached to the lid so as to permit visual monitoring of a cooking process on food placed without water or without oil or fat in said vessel which is itself placed over a heat source.

14. A vessel according to claim 13, **characterised in that** the lid is of metal and is treated so as to exhibit sufficiently high conductivity to create a heat bridge with a zone of said casing (10, 2) with which a part of the lid which tightly grips the casing is in contact.

15. A vessel according to one of claim 13 or claim 14, **characterised in that** the lid comprises an opening in which said casing (10, 2) is partially engaged, said cylindrical side face of the lower element (2) being in contact with the edge of said opening and the bottom thereof (2a) being directly exposed to the heat flux originating from the vessel.

## Patentansprüche

1. Vorrichtung zur Temperaturmessung, umfassend ein Thermometer mit einem Fühler mit Bimetallstreifen (1) und eine Anzeigeeinrichtung (3) zum Anzeigen der gemessenen Temperatur, die beide in einem Gehäuse (10, 2) untergebracht sind, das durch eine transparente Platte (9) verschlossen wird, wobei das Gehäuse ein oberes Teil (10) mit der Anzeigeeinrichtung (3) und ein unteres Teil (2) mit dem Bimetallfühler (1) umfasst, **dadurch gekennzeichnet, dass** das untere Teil (2) ein dünne Abdeckung (2b) umfasst, die sich oberhalb des Metallstreifens (1) erstreckt, und eine Wand (2a), die sich unterhalb des Streifens erstreckt, dass die Wand (2a) einen Boden des unteren Teils (2) bildet und sich über eine zylindrische Wand (2c) verlängert, in welche die Abdeckung (2b) so eingepasst ist, dass ein von unten nach oben verlaufender thermischer Fluss in Form einer Infrarotstrahlung oder ein durch Wasserdampf bedingter kalorischer Fluss, der das untere Teil (2) des Gehäuses erreicht, in die Wand (2a) und in die Abdeckung (2b) gelenkt wird, und dass ein Isolierteil (6) unmittelbar auf der Abdeckung (2b) im Gehäuse (10, 2) angeordnet ist, so dass das obere Teil (10) vom unteren Teil (2) thermisch isoliert wird.

2. Vorrichtung nach Anspruch 1, **dadurch gekennzeichnet, dass** sie so gestaltet ist, dass der Bimetallfühler (1) in einem Temperaturbereich zwischen der Umgebungstemperatur und 100 Grad Celsius arbeitet.

3. Vorrichtung nach einem beliebigen der Ansprüche 1 bis 2, **dadurch gekennzeichnet, dass** das obere Teil (10) und das untere Teil (2) des Gehäuses (10, 2) über ihre Seitenwände (10a, 2c), die aus unterschiedlichen Werkstoffen bestehen, aneinander befestigt sind.

4. Vorrichtung nach einem der Ansprüche 1 bis 3, **dadurch gekennzeichnet, dass** der Bimetallfühler (1) einen spiralförmig gewundenen Streifen umfasst, der an seinem äußeren Ende durch Schweißen oder Kleben an einer Seitenwand des unteren Teils (2) befestigt ist.

5. Vorrichtung nach einem der vorangehenden Ansprüche, **dadurch gekennzeichnet, dass** der Bimetallfühler (1) an seinen inneren Ende einen Stab (4) trägt, der durch die Abdeckung (2b) verläuft, welche die obere Wand des unteren Teils (2) bildet, wobei dieser Stab durch mindestens ein feststehendes Lagerelement des oberen Teils (10) drehend geführt wird und an seinen oberen Ende mit einer Anzeigenadel (3) versehen ist, die sich auf einer Skala (7) bewegt, oder mit einer Anzeigenadel oder Anzeigescheibe (3), wobei diese Einrichtungen unter der transparenten Wand (9) des oberen Teils (10) angeordnet sind.

6. Vorrichtung nach Anspruch 5, **dadurch gekennzeichnet, dass** der Bimetallstreifen (1) zwischen den beiden Metallschichten, aus denen er besteht, eine dünne Kupferfolie umfasst.

7. Vorrichtung nach einem der vorangehenden Ansprüche, **dadurch gekennzeichnet, dass** das untere Teil (2) des Gehäuses (10, 2) ein zylindrischer Körper ist, dessen Boden und Seitenwand aus einem dünnen Blech eines Metalls gebildet werden, das mindestens die gleiche mechanische Festigkeit und Wärmeleitfähigkeit wie Edelstahl besitzt.

8. Vorrichtung nach einem der vorangehenden Ansprüche, **dadurch gekennzeichnet, dass** das untere Teil (2) innen mit einem pulverförmigen, flüssigen oder pastösen Wärmeübertragungsmittel beschichtet ist, um die Temperatur um den Bimetallstreifen herum schnell auszugleichen.

9. Vorrichtung nach einem der vorangehenden Ansprüche, **dadurch gekennzeichnet, dass** eine Außenfläche (2a) des unteren Teils (2), die der Strahlung oder dem kalorischen Fluss ausgesetzt ist, behandelt ist, um ihr Thermischeaufnahmevermögen zu erhöhen.

10. Vorrichtung nach Anspruch 1, **dadurch gekennzeichnet, dass** die Abdeckung (2b) ein Teil aus Metallblech oder Kunststoff ist, das so angeordnet ist, dass der kalorische Fluss von der Seitenwand des Bodens (2a) zum Bimetallstreifen (1) gelenkt wird.

11. Vorrichtung nach Anspruch 1, **dadurch gekennzeichnet, dass** das gesamte Gehäuse aus einem teil aus dunkelfarbigen Kunststoff ausgeführt ist.

12. Vorrichtung nach Anspruch 11, **dadurch gekennzeichnet, dass** dieser Kunststoff unter den Polyamiden, PET und Polysulfonen gewählt ist.

13. Nahrungsmittelgarbehälter, umfassend einen Deckel mit einer Vorrichtung zur Temperaturmessung nach einem beliebigen der Ansprüche 1 bis 12, **dadurch gekennzeichnet, dass** das Gehäuse (10, 2) so am Deckel befestigt ist, das der Garvorgang bei Lebensmitteln, die ohne Wasser oder ohne Öl oder Fett in den Behälter gegeben werden, der wiederum auf einer Wärmequelle angeordnet wird, visuell überwacht werden kann.

14. Behälter nach Anspruch 13, **dadurch gekennzeichnet, dass** der Deckel aus Metall besteht und so behandelt ist, dass er eine ausreichend hohe Leitfähigkeit aufweist, um eine Wärmebrücke zu einem Bereich des Gehäuses (10, 2) zu bilden, mit dem ein Teil des Deckels, in den das Gehäuse eingespannt ist, in Kontakt ist.

15. Behälter nach einem der Ansprüche 13 oder 14, **dadurch gekennzeichnet, dass** der Deckel eine Öffnung aufweist, in die das Gehäuse (10, 2) teilweise eingeführt ist, wobei die zylindrische Seitenfläche des unteren Teils (2) mit dem Rand der Öffnung in Kontakt ist und sein Boden (2a) direkt aus dem Behälter kommenden Wärmefluss ausgesetzt ist.
